# EUROPÄISCHE PATENTSCHRIFT

(11) **EP 1 289 622 B1**
(45) Veröffentlichungstag und Bekanntmachung des Hinweises auf die Patenterteilung: **28.01.2004**
(21) Anmeldenummer: 01951497.5
(22) Anmeldetag: 10.05.2001
(51) Int. Cl.: B01D 33/073, B01D 33/48, B01D 33/56, B01D 33/72, B01D 33/74, B01D 33/76

(54) **ZENTRIFUGE MIT SIEB UND VERFAHREN ZUM BETREIBEN DER ZENTRIFUGE**
CENTRIFUGE WITH SIEVE AND METHOD FOR OPERATING SAID CENTRIFUGE
CENTRIFUGEUSE A TAMIS ET SON PROCEDE DE FONCTIONNEMENT

(30) Priorität: 08.06.2000 DE 10027959
(43) Veröffentlichungstag der Anmeldung: 12.03.2003
(73) Patentinhaber: Westfalia Separator AG, 59302 Oelde (DE)
(72) Erfinder: MACKEL, Wilfried, D-59302 Oelde (DE); HAMATSCHEK, Jochen, D-59302 Oelde (DE)
(74) Vertreter: Dantz, Jan Henning
(86) Internationale Anmeldenummer: PCT/EP2001/005333
(87) Internationale Veröffentlichungsnummer: WO 2001/093981

(56) Entgegenhaltungen:
- DE-A- 2 214 487
- DE-A- 2 529 614
- DE-A- 3 405 153
- DE-C- 468 442
- US-A- 4 271 019

## Beschreibung

Die Erfindung betrifft eine Zentrifuge, insbesondere Separator, mit einem Zulaufrohr und einem Verteiler zur Einleitung eines Schleudergutes in einen von einer Schleudertrommel begrenzten Schleuderraum, in dem ein im wesentlichen koaxial zum Zulaufrohr und/oder Verteiler angeordnetes Sieb angeordnet ist.

Eine derartige Zentrifuge ist aus der DE-A-34 05 153 bekannt. Dabei ist der Verteiler so angeordnet, daß die Flüssigkeit das Sieb von außen nach innen durchströmt. Der Feststoffsammelraum wird periodisch durch ein Auseinanderpressen der Zentrifugalteller durch eine Stellung geöffnet, wodurch die Feststoffe austreten; gleichzeitig ergibt sich infolge des Druckfalls eine Rückströmung der Flüssigkeit durch das Sieb von innen nach außen, so daß das Sieb gereinigt wird.

Die US-A-4 271 019 beschreibt eine Rückspülvorrichtung für ein Filter.

Die DE-C-468 442 beschreibt eine Zentrifuge mit Teller und Siebeinsatz.

Aus der DE 25 29 614 C2 ist eine Vorrichtung zur kontinuierlichen Rotationsdruckfiltration flüssiger Medien bekannt. Unter Filtration im Sinne dieser Schrift sind sowohl Sieb- als auch Membranfiltrationen sowie Mikro- oder Ultrafiltrationen zu verstehen. Durch eine hydrostatische Druckdifferenz wird eine Konzentratstromkomponente parallel zur Oberfläche des Filters erzeugt, wozu ein hydrodynamischer Förderdruck im Ringspalt zwischen der Zenrifugentrommel und dem koaxialen trommelförmigen Filterelement dadurch erzeugt wird, daß die Trommel und das Filterelement gleichzeitig mit voneinander verschiedenen Drehfrequenzen beaufschlagt werden. Ohne die unabhängige Relativverdrehbarkeit würde angeblich zwischen den Filtern eine nur so wenig effektive stark oberflächenlaminare Querstromkomponente entstehen, daß dem Fraktionierungsvorgang bereits kurz nach dem Beginn der Filtration durch Polarisationseffekte und Porenverschluß zum Erliegen käme.

Die separate Drehbarkeit der Siebtrommel bedingt einen hohen konstruktiven Aufwand und erhöht damit die Kosten der Zentrifuge in einem erheblichen Maße. Unter anderem aus diesem Grund hat sich nach einer Erkenntnis der Erfindung die beschriebene Lösung in der Praxis nicht durchgesetzt.

Anzumerken ist ferner, daß trotz der relativen Drehbarkeit der Siebtrommel zur Schleudertrommel des öfteren ein Rückspülen der Membran mit einer Spülflüssigkeit notwendig ist. Ein derartiges Rückspülen ist aber aufwendig und unterbricht den Schleudervorgang für einen nicht unbeträchtlichen Zeitraum.

Die Erfindung hat die Aufgabe, die eingangs beschriebene Zentrifuge derart weiterzuentwickeln, daß mit vereinfachtem konstruktiven und/oder verfahrenstechnischem Aufwand das Problem des Verstopfens des Siebes durch Feststoffpartikel bzw. das Problem einer unkomplizierten Reinigung der Zentrifuge gelöst wird.

Die Erfindung löst diese Aufgabe in Hinsicht auf die Zentrifuge durch den Gegenstand des Anspruches 1 und in Hinsicht auf das Verfahren durch den Gegenstand des Anspruchs 15.

Vorteilhafte Weiterbildungen der Erfindung sind den Unteransprüchen zu entnehmen.

Da der Feststoffsammelraum diskontinierlich verschließbar ist, erfolgt beim Öffnen des Feststoffsammelraumes ein Rückströmen der flüssigen Phase durch das Sieb.

Zum Ableiten der Feststoffe wird der Feststoffsammelraum durch Öffnen eines Kolbenschiebers geöffnet, so daß an dem Sieb bzw. der Siebtrommel angesetzte und/oder angelagerte Feststoffe und/oder Verunreinigungen (und u.U. auch Verstopfungen, Anbackungen) durch die vom Kolbenschieber freigegebene(n) Öffnung(en) abgeleitet werden.

Hierdurch wird auf einfache Weise ein Reinigungseffekt des Siebes erzeugt, denn beim Öffnen der Kolbenschieber strömt Flüssigkeit aus dem Flüssigkeitsableitraum durch das Sieb zurück in den Feststoffsammelraum, wodurch das Sieb zusetzende Feststoffe nun aus dem Sieb gelöst und durch die vom Kolbenschieber freigegebene(n) Öffnung(en) abgeleitet werden.

Die Erfindung nutzt somit den unerwarteten Effekt, daß beim Öffnen der an sich bekannten Kolbenschieber zum Ableiten der Feststoffe das Sieb auf einfache und den Schleudervorgang quasi nicht unterbrechende Weise gereinigt wird. Ein besonderer Vorteil dieser Reinigung ist darin zu sehen, daß das Rückströmen ohne den zusätzlichen Einsatz einer Spülflüssigkeit durchgeführt werden kann und daß erst nach einem relativ langem Betrieb ein Rückspülen mit einer derartigen Spülflüssigkeit erforderlich ist. Hervorzuheben ist noch, daß es aufgrund der modernen Steuerungstechnik möglich ist, den Entleerungsmechanismus sehr genau zu steuern und derart auch die Reinigungseffekte in einer gewünschten Art und Weise zu kontrollieren.

Durch den Reinigungseffekt wird somit eine hohe Standzeit des Membraneinsatzes erreicht, ohne daß verstopfungsbedingt ein Produktionsstop erforderlich ist. Durch die Schnelligkeit des Entleerungsmechanismus und die mögliche Regelung des Austragsvolumens kann die Intensität des Reinigungseffektes produktabhängig gesteuert werden.

Es ist auch die Ableitung des Konzentrats über einen Scheideteller oder Röhrchen, Kanäle und Düsen außerhalb des Membraneinsatzes denkbar. Dieses kann produktabhängig zur Verlängerung der Rückspülungsabstände (Entleeerungsabstände) führen. Auch eine Automatisierung der Entleerungszeitpunkt ist durch Überwachung der dort abgeleiteten Phase möglich.

Es ist auch die Abfuhr eines Teilstromes des Konzentrats über Düsen am Kolbenschieber denkbar. Zu einer derartigen Ableitung mittels Düsen am Kolbenschieber sei auf die DE 22 14 487 verwiesen.

Die relative Drehbarkeit zwischen Sieb- und Trommelmantel muß damit nicht mehr realisiert werden, obwohl diese Maßnahme im Prinzip natürlich auch mit der Idee der vorliegenden Erfindung beliebig kombinierbar ist. Die Erfindung läßt sich im Prinzip auch mit der ebenfalls an sich bekannten Idee einer im Feststoffsammelraum angeordneten Einrichtung zur kontinuierlichen Ableitung der Feststoffphase kombinieren, solange zum Reinigen der vorstehend beschriebene Rückströmeffekt genutzt wird.

Besonders vorteilhaft ist es, dem, insbesondere der Siebtrommel, ein Tellerpaket zuzuordnen und/oder nachzuschalten, so daß nach der Klärung des Produktes in der Siebtrommel eine Trennung verschiedener Flüssigkeitsphasen voneinander im Tellerpaket erfolgen kann.

Die Erfindung kombiniert damit in besonders einfacher Weise die an sich bekannte Technologie moderner Kolbenschieberseparatoren mit der Idee eines Membransiebes und schafft derart eine Art "Membranseparator" mit der Option einer nachgeschalteten Phasentrennung im Tellerpaket, der optional überraschend einfach das Problem des Verstopfens der Siebe der Separatoren löst.

Bevorzugt weist der Feststoffsammelraum eine doppelt konische Form auf und das Sieb wird als Membransieb, insbesondere als Keramik-Membransieb, ausgelegt.

Nachfolgend werden unter Bezug auf die Zeichnung Ausführungsbeispiele näher beschrieben. Es zeigt:
- Fig. 1: einen Schnitt durch eine Zentrifuge, wobei im linken Teil der Figur die Strömungsverhältnisse beim Trennschleudem und im rechten Teil der Figur die Strömungsverhältnisse beim Reinigen veranschaulicht werden;
- Fig. 2: einen Schnitt durch einen Abschnitt einer weiteren Zentrifuge; und
- Fig. 3: einen Schnitt durch eine weitere Zentrifuge, wobei im linken Teil der Zentrifuge beispielhaft die Option einer Kombination aus Sieb und Tellerpaket veranschaulicht wird.

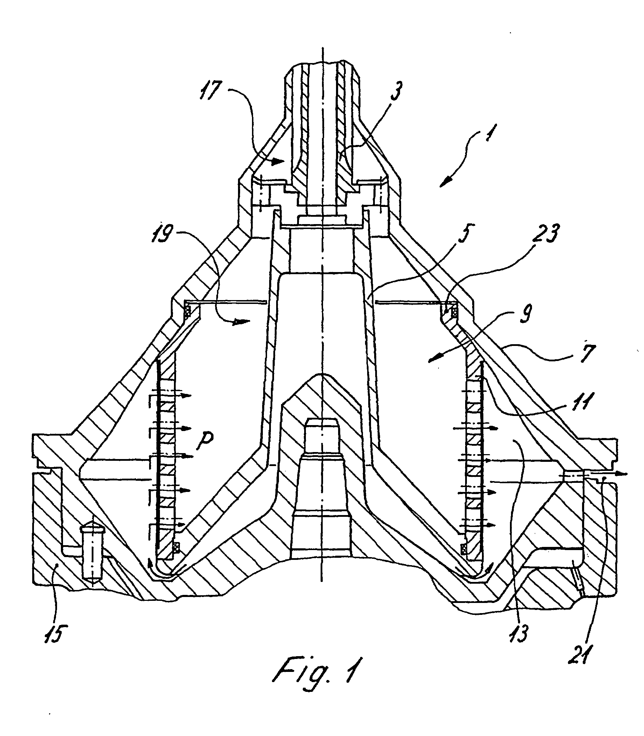

Fig. 1 zeigt einen Separator 1 mit einem Zulaufrohr 3, der in einen Verteiler 5 mündet, der zur Einleitung eines Schleudergutes in einen von einer (ein- oder mehrteiligen) Schleudertrommel 7 begrenzten, doppelt konisch ausgelegten Schleuderraum 9 dient, in dem ein Membransieb in einer Ausbildung als Siebtrommel 11 aus einem Keramikwerkstoff angeordnet ist.

Der Verteiler 5 reicht bis in den unteren Bereich der Schleudertrommel 7 und ist in seinem unteren Bereich mit dem unteren Rand der Siebtrommel 11 verbunden, so daß das Schleudergut im unteren Bereich der Schleudertrommel 7 radial nach außen in den Bereich außerhalb des Außenumfanges der Siebtrommel 11 geleitet wird, der einen Feststoffsammelraum 13 ausbildet. Von hier strömt beim Trennschleudern die flüssige Phase P des eingeleiteten Schleudergutes radial von außen nach innen durch die Membran der Siebtrommel 11. Im oberen Bereich ist die Siebtrommel konisch ausgebildet und liegt im Bereich einer Ringnut 23 mit Dichtung 25 endend abschnittsweise an der Innenwandung der Schleudertrommel 7 an.

Der Feststoffsammelraum 13 kann mittels Kolbenschiebern 15 diskontinuierlich geöffnet und verschlossen werden. Beim Öffnen des Kolbenschiebers 15 werden die Feststoffe aus dem Feststoffsammelraum nach außen geleitet. Hierbei entsteht eine Rückströmung aus dem Flüssigkeitsableitraum 19 innerhalb der als Siebmantel ausgebildeten Siebtrommel 11 durch den Siebmantel, die am Siebmantel angelagerte Feststoffe löst und ebenfalls durch die Kolbenschieberöffnungen 21 nach außen leitet.

Aus dem Flüssigkeitsableitraum wird die flüssige Phase P durch Kanäle 17 und/oder mittels Greifern abgeleitet.

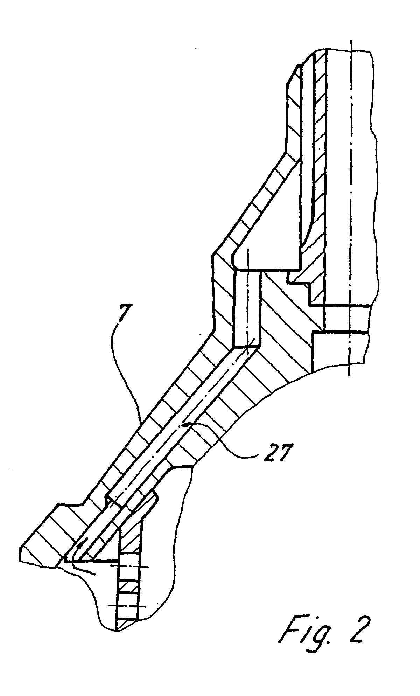

Fig. 2 zeigt einen Kanal 27 in der Wandung der Schleudertrommel 7 zur Ableitung der Feststoffphase.

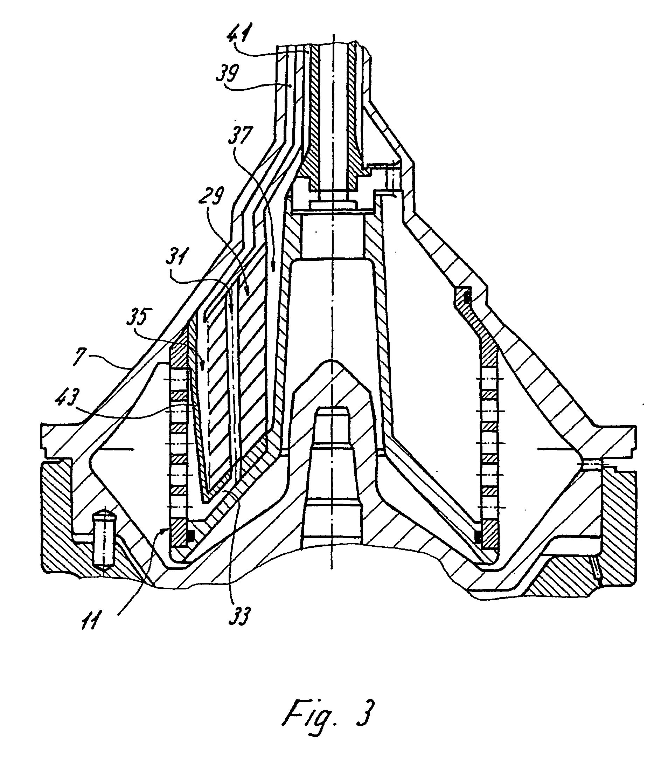

Fig. 3 zeigt ein weiteres Ausführungsbeispiel der Erfindung, bei dem in die Siebtrommel 11 ein Tellerpaket 29 eingesetzt wurde. Lediglich beispielhaft wurde das ringsum umlaufende Tellerpaket 29 nur in den linken Teil der Fig. 3 eingezeichnet. Das Tellerpaket 29 erstreckt sich hier in konstruktiv einfacher Weise von der oberen konischen Innenwandung der Schleudertrommel 7 nach unten bis zur Wandung der Siebtrommel 11 und kann an der Siebtrommel 11 befestigt sein. Eine Halterung 43 am Außenumfang des Tellerpaketes 29, die am Siebmantel 11 oder an der Schleudertrommel 7 befestigt ist, trägt in konstruktiv einfacher Weise die Teller des Tellerpaketes 29.

Im Tellerpaket sind Steigekanäle 31 ausgebildet, denen das Produkt über mindestens einen oder mehrere Zufuhrkanäle 33 am unteren Rand des Tellerpaktes 29 (z.B. zwischen dem Tellerpaket 29 und der Siebtrommel 11 ausgebildet) zugeleitet wird.

Ableitungskanäle 35, 37 am Außenumfang und am Innenumfang der Tellerpaketes ermöglichen die Ableitung verschiedener Flüssigkeitsphasen, die beim Durchlaufen des Tellerpaketes voneinander getrennt werden. Beide Ableitungskanäle 35 und 37 münden in weitere Ableitungskanäle 39, 41 in der Wandung der Schleudertrommel 7.

Diese Variante der Erfindung hat den folgenden Vorteil. Zunächst erfolgt das Sieben des zu klärenden Produktes nach Art der Fig. 1. Nach dem Durchtreten der Siebtrommel 11 tritt das insoweit geklärte Produkt durch den Zufuhrkanal 33 in das Tellerpaket 29 ein. Dort werden hier zwei Flüssigkeitsphasen verschiedener Dichte voneinander getrennt und dann über die Ableitungskanäle 35, 37 am Innen- und Außenumfang des Tellerpaketes 29 und die weiteren sich daran anschließenden Ableitungskanäle 39, 41 abgeleitet.

### Bezugszeichen

- Separator: 1
- Zulaufrohr: 3
- Verteiler: 5
- Schleudertrommel: 7
- Schleuderraum: 9
- Siebtrommel: 11
- Feststoffsammelraum: 13
- Kolbenschieber: 15
- Kanäle: 17
- Flüssigkeitsableitraum: 19
- Kolbenschieberöffnungen: 21
- Ringnut: 23
- Dichtung: 25
- Kanal: 27
- Tellerpaket: 29
- Steigekanäle: 31
- Zufuhrkanäle: 33
- Ableitungskanäle: 35, 37
- Ableitungskanäle: 39, 41
- Halterung: 43

## Patentansprüche

1. Zentrifuge, insbesondere Separator,
a) mit einem Zulaufrohr (3) und einem Verteiler (5) zur Einleitung eines Schleudergutes in einen von einer Schleudertrommel (7) begrenzten Schleuderraum (9),
b) in dem ein im wesentlichen koaxial zum Zulaufrohr (3) und/oder Verteiler angeordnetes Sieb angeordnet ist,
c) wobei der Verteiler derart ausgelegt ist, daß er das Schleudergut in einem Bereich des Schleuderraumes leitet, der radial außerhalb des Außenumfanges des Siebes angeordnet ist - Feststoffsammelraum (13) - so daß beim Trennschleudern die flüssige Phase des eingeleiteten Schleudergutes radial von außen nach innen durch das Sieb (11) strömt,
d) wobei der Feststoffsammelraum Öffnungen aufweist, die von einem Kolbenschieber (15) diskontinuierlich verschließbar und freigebbar sind, so daß beim Öffnen des Feststoffsammelraumes (13) ein Rückströmen der flüssigen Phase durch das Sieb erfolgt.

2. Zentrifuge nach Anspruch 1, **dadurch gekennzeichnet, daß** der Feststoffsammelraum (13) eine doppelt konische Form aufweist.

3. Zentrifuge nach Anspruch 1 oder 2, **dadurch gekennzeichnet, daß** das Sieb ein Membransieb ist.

4. Zentrifuge nach Anspruch 3, **dadurch gekennzeichnet, daß** das Sieb ein Keramik-Membransieb ist.

5. Zentrifuge nach einem der vorstehenden Ansprüche, **dadurch gekennzeichnet, daß** das Sieb als Siebtrommel (11) ausgebildet ist.

6. Zentrifuge nach einem der vorstehenden Ansprüche, **dadurch gekennzeichnet, daß** der Verteiler (5) bis in den unteren Bereich der Schleudertrommel (7) reicht und/oder mit dem unteren Rand der Siebtrommel (11) verbunden ist.

7. Zentrifuge nach einem der vorstehenden Ansprüche, **dadurch gekennzeichnet, daß** im Feststoffsammelraum (13) eine Einrichtung zur kontinuierlichen Ableitung der Feststoffphase angeordnet ist.

8. Zentrifuge nach Anspruch 7, **dadurch gekennzeichnet, daß** die Einrichtung zur kontinuierlichen Ableitung der Feststoffphase ein Scheideteller, ein Rohr oder Kanal (27) oder eine Düse ist.

9. Zentrifuge nach einem der vorstehenden Ansprüche, **dadurch gekennzeichnet, daß** dem Sieb ein Tellerpaket (29) zugeordnet und/oder nachgeschaltet ist.

10. Zentrifuge nach Anspruch 9, **dadurch gekennzeichnet, daß** das Tellerpaket (29) in die Siebtrommel (11) eingesetzt ist.

11. Zentrifuge nach Anspruch 10, **dadurch gekennzeichnet, daß** sich das Tellerpaket (29) von der Innenwandung der Schleudertrommel (7) bis zur Wandung der Siebtrommel (11) erstreckt.

12. Zentrifuge nach einem der Ansprüche 9 bis 11, **dadurch gekennzeichnet, daß** im Tellerpaket Steigekanäle (31) ausgebildet sind, denen das Produkt über Zufuhrkanäle (33) zugeleitet wird.

13. Zentrifuge nach einem der Ansprüche 9 bis 12, **dadurch gekennzeichnet, daß** am Außenumfang und am Innenumfang der Tellerpaketes (29) Ableitungskanäle (35, 37)ausgebildet sind.

14. Zentrifuge nach einem der Ansprüche 9 bis 13, **dadurch gekennzeichnet, daß** eine Halterung (43) am Außenumfang des Tellerpaketes (29), die am Siebmantel (11) oder an der Schleudertrommel (7) befestigt ist, die Teller des Tellerpaketes (29) trägt.

15. Verfahren zum Betreiben einer Zentrifuge nach einem der vorstehenden Ansprüche, **dadurch gekennzeichnet, daß** zum Reinigen der Zentrifuge der Feststoffsammelraum geöffnet wird, so daß Flüssigkeit aus dem Flüssigkeitsableitraum durch das Sieb zurück in den Feststoffsammelraum strömt, wobei zum Reinigen der Zentrifuge der den Feststoffsammelraum verschließende Kolbenschieber geöffnet wird, wodurch sich am Sieb angesetzte und/oder angelagerte Feststoffe und/oder Verunreinigungen aus dem Sieb gelöst und durch vom Kolbenschieber freigegebene(n) Öffnung(en) aus dem Feststoffsammelraum abgeleitet werden.

## Claims

1. Centrifuge, in particular separator,
a) having a feeder pipe (3) and a distributor (5) for introducing a material to be centrifuged into a centrifuge chamber (9) bounded by a centrifuge drum (7),
b) in which chamber a screen is arranged substantially coaxially with the feed pipe (3) and/or distributor,
c) the distributor being designed in such a way that it conducts the material to be centrifuged into a region of the centrifuge chamber which is arranged radially outside the outer circumference of the screen - solids collecting chamber (13) - so that, during separation centrifuging, the liquid phase of the introduced material to be centrifuged flows through the screen (11) radially from the outside to the inside,
d) the solids collecting chamber having openings which can be closed and opened discontinuously by a piston slide (15) so that, when the solids collecting chamber (13) is opened, reverse flow of the liquid phase through the screen takes place.

2. Centrifuge according to Claim 1, **characterized in that** the solids collecting chamber (13) has a double conical shape.

3. Centrifuge according to Claim 1 or 2, **characterized in that** the screen is a membrane screen.

4. Centrifuge according to Claim 3, **characterized in** the screen is a ceramic membrane screen.

5. Centrifuge according to one of the preceding claims, **characterized in that** the screen is formed as a screen drum (11).

6. Centrifuge according to one of the preceding claims, **characterized in that** the distributor (5) reaches as far as the lower region of the centrifuge drum (7) and/or is connected to the lower rim of the screen drum (11).

7. Centrifuge according to one of the preceding claims, **characterized in that** a device for the continuous discharge of the solid phase is arranged in the solids collecting chamber (13).

8. Centrifuge according to Claim 7, **characterized in that** the device for the continuous discharge of the solid phase is a separating plate, a pipe or channel (27) or a nozzle.

9. Centrifuge according to one of the preceding claims, **characterized in that** a plate pack (29) is assigned to and/or connected downstream of the screen.

10. Centrifuge according to Claim 9, **characterized in that** the plate pack (29) is inserted into the screen drum (11).

11. Centrifuge according to Claim 10, **characterized in that** the plate pack (29) extends from the inner wall of the centrifuge drum (7) as far as the wall of the screen drum (11).

12. Centrifuge according to one of Claims 9 to 11, **characterized in that** rising channels (31) to which the product is led via feed channels (33) are formed in the plate pack.

13. Centrifuge according to one of Claims 9 to 12, **characterized in that** discharge channels (35, 37) are formed on the outer circumference and on the inner circumference of the plate pack (29).

14. Centrifuge according to one of Claims 9 to 13, **characterized in that** a holder (43) on the outer circumference of the plate pack (29), which holder is fixed to the outer of the screen (11) or to the centrifuge drum (7), carries the plates of the plate pack (29).

15. Method of operating a centrifuge according to one of the preceding claims, **characterized in that**, in order to clean the centrifuge, the solids collecting chamber is opened, so that liquid from the liquid discharge chamber flows back through the screen into the solids collecting chamber, the piston slide that closes the solids collecting chamber being opened in order to clean the centrifuge, as a result of which solids attached to the screen and/or deposited solids and/or contaminants are loosened from the screen and discharged from the solids collecting chamber through an opening or openings opened by the piston slide.

## Revendications

1. Centrifugeuse, en particulier séparateur,
a) avec un tuyau d'amenée (3) et un distributeur (5) pour l'introduction d'une masse centrifugée dans un espace centrifuge (9) limité par un panier centrifuge (7),
b) dans lequel est disposé un tamis situé de manière essentiellement coaxiale au tuyau d'amenée (3) et/ou au distributeur,
c) le distributeur étant conçu de telle sorte qu'il conduit la masse centrifugée dans une zone de l'espace centrifuge, qui est disposée radialement à l'extérieur de la périphérie externe du tamis -espace collecteur de solides (13)- si bien que la phase liquide de la masse centrifugée introduite s'écoule lors de la séparation centrifuge radialement de l'extérieur vers l'intérieur à travers le tamis (11),
d) l'espace collecteur de solides comprenant des orifices qui peuvent être fermés et dégagés de manière discontinue par un robinet à piston (15), de sorte qu'un reflux de la phase liquide a lieu par le tamis à l'ouverture de l'espace collecteur de solides (13).

2. Centrifugeuse selon la revendication 1, **caractérisée en ce que** l'espace collecteur de solides (13) présente une forme conique double.

3. Centrifugeuse selon la revendication 1 ou 2, **caractérisée en ce que** le tamis est un tamis à membrane.

4. Centrifugeuse selon la revendication 3, **caractérisée en ce que** le tamis est un tamis à membrane en céramique.

5. Centrifugeuse selon l'une des revendications précédentes, **caractérisée en ce que** le tamis est configuré comme un tambour perforé (11).

6. Centrifugeuse selon l'une des revendications précédentes, **caractérisée en ce que** le distributeur (5) s'étend jusque dans la zone inférieure du panier centrifuge (7) et/ou est relié au bord inférieur du tambour perforé (11).

7. Centrifugeuse selon l'une des revendications précédentes, **caractérisée en ce qu'**une installation de dérivation continue de la phase solide est disposée dans l'espace collecteur de solides (13).

8. Centrifugeuse selon la revendication 7, **caractérisée en ce que** l'installation de dérivation continue de la phase solide est un plateau de séparation, un tuyau ou un conduit (27) ou une buse.

9. Centrifugeuse selon l'une des revendications précédentes, **caractérisée en ce qu'**un paquet de plateaux (29) est attribué au tamis et/ou est intercalé en arrière de celui-ci.

10. Centrifugeuse selon la revendication 9, **caractérisée en ce que** le paquet de plateaux (29) est mis en oeuvre dans le tambour perforé (11).

11. Centrifugeuse selon la revendication 10, **caractérisée en ce que** le paquet de plateaux (29) s'étend de la paroi interne du panier centrifuge (7) à la parol du tambour perforé (11).

12. Centrifugeuse selon l'une des revendications 9 à 11, **caractérisée en ce que** des conduits de montée (31), dont le produit est dirigé par des conduits de distribution (33), sont configurés dans le paquet de plateaux.

13. Centrifugeuse selon l'une des revendications 9 à 12, **caractérisée en ce que** des conduits de dérivation (35, 37) sont configurés sur la périphérie externe et sur la périphérie interne du paquet de plateaux (29).

14. Centrifugeuse selon l'une des revendications 9 à 13, **caractérisée en ce qu'**une bride de support (43), située sur la périphérie externe du paquet de plateaux (29), qui est fixée sur le bol perforé (11) ou sur le panier centrifuge (7) supporte les plateaux du paquet de plateaux (29).

15. Procédé de fonctionnement d'une centrifugeuse selon l'une des revendications précédentes, **caractérisé en ce que** l'espace collecteur de solides est ouvert pour le nettoyage de la centrifugeuse, de sorte que le liquide provenant de l'espace de dérivation de liquide reflue à travers le tamis dans l'espace collecteur de solides, le robinet à piston qui ferme l'espace collecteur de solides étant ouvert pour le nettoyage de la centrifugeuse, et les solides et/ou impuretés appliqués et/ou déposés sur le tamis étant détachés du tamis et évacués de l'espace collecteur de solides par l'(les)orifice(s) libéré(s) par le robinet à piston.
